# EUROPÄISCHE PATENTSCHRIFT

(11) **EP 1 796 934 B1**
(45) Veröffentlichungstag und Bekanntmachung des Hinweises auf die Patenterteilung: **06.09.2017**
(21) Anmeldenummer: 05792112.4
(22) Anmeldetag: 14.09.2005
(51) Int. Cl.: B60K 31/04, B60K 31/00

(54) **SYSTEM UND VERFAHREN ZUR EINSTELLUNG DER GESCHWINDIGKEIT EINES FAHRZEUGS AUF EINE ZULÄSSIGE HÖCHSTGESCHWINDIGKEIT**
SYSTEM AND METHOD FOR SETTING THE SPEED OF A VEHICLE TO A MAXIMUM PERMISSIBLE SPEED
SYSTEME ET PROCEDE POUR AJUSTER LA VITESSE D'UN VEHICULE A UNE VITESSE MAXIMALE TOLEREE

(30) Priorität: 05.10.2004 DE 102004048468
(43) Veröffentlichungstag der Anmeldung: 20.06.2007
(73) Patentinhaber: Continental Automotive GmbH, 30165 Hannover (DE)
(72) Erfinder: JATSCHKA, Thomas, A-2102 Kleinengersdorf (AT); POHL, Alfred, A-2130 Mistelbach (AT); TSCHOFEN, Robert, A-1140 Wien (AT); ZIMMERMANN, Gernot, A-1130 Wien (AT)
(74) Vertreter: Bobbert, Christiana
(86) Internationale Anmeldenummer: PCT/EP2005/054561
(87) Internationale Veröffentlichungsnummer: WO 2006/037713

(56) Entgegenhaltungen:
- EP-A- 1 288 055
- WO-A1-00/05091
- WO-A1-2004/068439
- DE-A1- 10 004 525
- DE-A1- 10 303 010
- DE-A1- 19 802 594
- DE-U1- 29 924 602
- GB-A- 2 390 438
- US-A1- 2002 072 963
- US-A1- 2004 030 483

## Beschreibung

Die Erfindung betrifft ein System und ein Verfahren zur Einstellung der Geschwindigkeit eines Fahrzeugs auf eine zulässige Höchstgeschwindigkeit. Das System enthält eine Begrenzungseinrichtung, die mittels Motoreingriff die erreichbare Fahrgeschwindigkeit des Fahrzeugs auf einen Maximalwert begrenzt, und eine Informationseinrichtung, die bei einer Änderung der zulässigen Höchstgeschwindigkeit während der Fahrt die Begrenzungseinrichtung veranlasst, die Fahrgeschwindigkeit auf einen geänderten Maximalwert zu begrenzen. Die Informationseinrichtung ist dabei eine Einrichtung zur Erkennung des aktuell befahrenen Straßentyps, welche aus einer Speichereinrichtung die zu dem aktuell befahrenen Straßentyp als auch zu einem aktuell befahrenen Gebiet gehörende zulässige Höchstgeschwindigkeit ausliest und als geänderten Maximalwert berücksichtigt.

Eine Vorrichtung und ein zugehöriges Verfahren zur Einstellung der Geschwindigkeit eines Fahrzeugs auf eine zulässige Höchstgeschwindigkeit sind aus der DE-197 12 722-A1 bekannt, wobei eine externe Sendeeinrichtung Signale über die zulässige Höchstgeschwindigkeit abgibt entsprechend der durch Hinweisschilder angezeigten Geschwindigkeitsbegrenzung auf Straßenabschnitten, wie beispielsweise Autobahnauffahrten oder Baustellen.

Aus der GB 2 390 438 A ist eine Fahrzeugregeleinrichtung bekannt, welche für die Einhaltung der zugelassenen Höchstgeschwindigkeit sorgt. Dazu ermittelt sie satellitengestützt die aktuelle Fahrzeugposition, leitet davon die aktuell geltende Höchstgeschwindigkeit ab und begrenzt die Geschwindigkeit des Fahrzeugs entsprechend.

In heutigen Fahrzeugen kommen Begrenzungseinrichtungen zur Limitierung der erreichbaren Fahrgeschwindigkeit im Zusammenhang mit Tempomaten zum Einsatz, wobei die gewünschte Maximalgeschwindigkeit vom Fahrer selbst vorgegeben wird.

Die US 2004/0030483 A1 offenbart hierzu einen Tempomaten, der bei einer Wiederaufnahme seiner Tätigkeit die vom Fahrer gewünschte Geschwindigkeit auf einen Maximalwert begrenzt, wobei dieser Maximalwert mit Hilfe eines Navigationssystems bestimmt wird, indem anhand der aktuellen Fahrzeugposition der Straßentyp der gerade befahrenen Straße ermittelt und daraus die maximal zulässige Geschwindigkeit abgeleitet wird. Zusätzlich können die zulässigen Geschwindigkeiten je Straßentyp auch einzelnen Ländern zugeordnet sein. In diesem Fall kann der Fahrer eingeben, in welchem Land sich das Fahrzeug gerade befindet.

Bekannt sind außerdem Abstandsregeleinrichtungen, bei denen automatisch der Abstand zu einem vorausfahrenden Fahrzeug eingestellt wird.

So offenbart die DE 103 03 010 A1 eine Tempomatsteuerung und ein Abstandsregelsystem, bei denen die Geschwindigkeit des Kraftfahrzeugs automatisch auf eine gültige Geschwindigkeitsbegrenzung eingestellt wird. Zur Erkennung der aktuell gültigen Geschwindigkeitsbegrenzung ist eine automatische Verkehrszeichenerkennung vorhanden, welche logisch mit einer automatischen Erkennung des streckenbezogenen Gültigkeitsbereichs des jeweils erkannten Verkehrszeichens gekoppelt ist.

Auch die EP 1 288 055 A2 beschreibt eine Kombination von Geschwindigkeits- und Abstandsregelung eines Kraftfahrzeugs, wobei nach der durch den Fahrer initiierten Beendigung der Tempomatfunktion die Geschwindigkeitsregelung mit einer neuen, an die aktuelle Fahrumgebung angepassten Maximalgeschwindigkeit wiederaufgenommen wird. Die Fahrumgebung wird dabei anhand von Karteninformationen oder von empfangenen Mautinformationen erkannt.

Aus der DE 100 04 525 A1 geht ein Geschwindigkeits- und Abstandsregelsystem eines Kraftfahrzeugs hervor, bei dem mit Hilfe der Daten eines Navigationssystems die Art der befahrenen Straße bestimmt und in Abhängigkeit von der Art der befahrenen Straße die Parameter der Abstandsregelung eingestellt werden.

Die WO2004/068439A1 gibt ein Verfahren und eine Einrichtung zur Anzeige und/oder automatischen Anpassung der Geschwindigkeit an. Die Geschwindigkeitsanpassung soll auf Basis einer Verkehrszeichenerkennung angepasst werden.

Die DE10004525A1 offenbart ein Abstandsregelsystem, bei dem nur der Fahrer eine Maximalgeschwindigkeit vorgeben kann. Es ist ein Navigationssystem vorgesehen, um die momentan befahrene Straße sowie die Fahrtrichtung des Fahrzeugs festzustellen.

In der Schrift WO00/05091 wird eine Vorrichtung zur Detektion einer Position eines Fahrzeugs offenbart. Diese kann beispielsweise über ein Mobilfunknetz übermittelt werden.

Die Schrift DE19802594A1 offenbart ein Verfahren zum Steuern von Einrichtungen für automatisierte Fahrfunktionen. Dazu ist vorgesehen, dass aus einem empfangenen Funksignal Daten bezüglich eines momentanen Aufenthaltslandes dekodiert werden. Basierend darauf wird die Erkennung von Rechts- bzw. Linksverkehr und die Steuerung der Fahrzeuglichter gemäß der nationalen Erfordernisse vorgeschlagen

Bei LKW und Bussen ist es ab einem bestimmten Fahrzeuggewicht gesetzlich vorgeschrieben, dass eine Begrenzungseinrichtung verwendet wird, die für die Einhaltung der für die entsprechende Fahrzeugklasse geltenden gesetzlichen Höchstgeschwindigkeit sorgt. Ein Beispiel für eine solche Begrenzungseinrichtung ist der Geschwindigkeitsbegrenzer AGB II der Siemens VDO AG. Bei den bekannten Begrenzungseinrichtungen wird der Maximalwert der erreichbaren Fahrgeschwindigkeit fest in einer Speichereinrichtung abgelegt, so dass dieser Maximalwert für den gesamten Fahrbetrieb des Fahrzeugs gilt und nur durch einen Werkstattbesuch änderbar ist. Der nächstliegende bekanntgewordene Stand der Technik ist der DE 10303010 A1 zu entnehmen. Aufgabe der vorliegenden Erfindung ist es, die bekannten Systeme und Verfahren zur Geschwindigkeitsbegrenzung dahingehend zu verbessern, dass sie flexibler einsetzbar sind.

Diese Aufgabe wird mit einem System nach Anspruch 1 und einem Verfahren nach Anspruch 9 gelöst.

Bei dem erfindungsgemäßen System ist die Informationseinrichtung mit einer drahtlosen Empfangseinheit versehen, welche ein von einer externen Sendeeinheit übermitteltes Gebietssignal zur Identifizierung des aktuell befahrenen Gebietes empfängt.

Das erfindungsgemäße Verfahren enthält die Schritte, dass ein von einer externen Sendeeinheit übermitteltes Gebietssignal zur Identifizierung des aktuell befahrenen Gebietes mittels einer drahtlosen Empfangseinheit empfangen wird.

Mit dem erfindungsgemäßen System und dem erfindungsgemäßen Verfahren kann die erreichbare Fahrgeschwindigkeit des Fahrzeugs an die jeweils geltenden gesetzlichen Vorschriften auf unterschiedlichen Straßentypen und bezogen auf das jeweils befahrene Gebiet angepasst werden.

Die erfindungsgemäße Informationseinrichtung ermittelt eine zulässige Höchstgeschwindigkeit in Abhängigkeit von sowohl dem aktuell befahrenen Straßentyp als auch einem aktuell befahrenen Gebiet. Ein Gebiet wird dabei als ein durch einen Polygonzug eingegrenzter Teil eines Straßennetzes verstanden. Die Zuordnung zwischen dem befahrenen Gebiet, dem befahrenen Straßentyp und der zulässigen Höchstgeschwindigkeit kann dabei beispielsweise als dreidimensionales Parameterfeld in der Speichereinrichtung abgelegt sein.

In einer Unterausführung ist das aktuell befahrene Gebiet durch die Grenzen eines Landes bestimmt. Ebenso könnte ein Gebiet als Region oder Länderverbund definiert werden. Wesentlich dabei ist, dass zwischen einzelnen Gebieten unterschiedliche Höchstgeschwindigkeiten für gleiche Straßentypen gelten, während es innerhalb eines Gebietes einheitliche Regelungen gibt. Durch die Anpassung an die gebietsweise geltenden Höchstgeschwindigkeiten wird die Flexibilität der Geschwindigkeitsbegrenzung erhöht, was für Führer von Nutzfahrzeugen nicht nur Zeitvorteile bringt. So gelten momentan beispielsweise in verschiedenen Ländern der Europäischen Union unterschiedliche Höchstgeschwindigkeiten für gleiche Fahrzeugklassen. Nutzfahrzeugführer aus Deutschland empfinden es als Belastung, wenn sie beispielsweise in den Niederlanden als Verkehrshindernis unterwegs sind, da ihr Maximalwert der Fahrgeschwindigkeit für Autobahnen niedriger eingestellt ist als bei einheimischen Nutzfahrzeugen. Solche Belastungen werden mit einer gebietsweisen Geschwindigkeitsanpassung vermieden und der Verkehrsfluss wird verbessert. Erfindungsgemäß ist die Informationseinrichtung mit einer drahtlosen Empfangseinheit versehen, die ein von einer externen Sendeeinheit übermitteltes Gebietssignal zur Identifizierung des aktuell befahrenen Gebietes empfängt.

In einer Ausgestaltung ist die Empfangseinheit eine Mobilfunkeinheit, wie beispielsweise eine GSM-Einheit, die eine Länderkennung übermittelt. Solche Mobilfunkeinheiten sind in Mautsystemen teilweise standardmäßig vorgesehen, um eine Kommunikation zu einer Zentralstation zum Austausch von mautrelevanten Daten zu ermöglichen. Je nach aktuellem Mobilfunknetz, in dem sich das Fahrzeug bewegt, wird ein entsprechender Ländercode per GSM ausgesandt, der von der Informationseinrichtung genutzt werden kann, um auf das zu diesem Land gehörende, zweidimensionale Parameterfeld der Straßentypen mit zugehöriger Höchstgeschwindigkeit zuzugreifen. Die Ermittlung des aktuell befahrenen Gebietes innerhalb der Informationseinrichtung durch Überprüfung des Überschreitens von Gebietsgrenzen entfällt hierbei.

In einer bevorzugten Ausgestaltung unterscheidet die Informationseinrichtung beim aktuell befahrenen Straßentyp zwischen einer mautpflichtigen Straße und einer nicht-mautpflichtigen Straße. Die Informationseinrichtung kann demzufolge direkt ein Mauterfassungsgerät sein, welches zur Ermittlung der zu zahlenden Straßenbenutzungsgebühren erkennt, ob sich das Fahrzeug gerade auf einer mautpflichtigen Straße befindet oder nicht. Das Mauterfassungsgerät wird demnach direkt mit der Begrenzungseinrichtung gekoppelt. Auf einer mautpflichtigen Straße kann nun eine andere zulässige Höchstgeschwindigkeit gelten als auf nicht-mautpflichtigen Straßen. Dies ist insbesondere bei Mautsystemen der Fall, bei denen Mautgebühren nur auf Autobahnen und höchstens noch Schnellstraßen erhoben werden. Auf diesen Straßen kann dann ein entsprechend höherer Maximalwert der Fahrgeschwindigkeit vorgegeben werden als auf nicht-mautpflichtigen Straßen. Infolge der auf den mautpflichtigen Straßen höheren erreichbaren Fahrgeschwindigkeit und der daraus folgenden kürzeren Transportzeiten werden weniger Nutzfahrzeuge auf Land- und Seitenstraßen ausweichen, so dass die Verkehrsbelastung auf Nebenstrecken verringert werden kann, was einen geringeren Sanierungsbedarf dieser Strecken zur Folge hat.

In einer weiteren Ausgestaltung unterscheidet die Informationseinrichtung zwischen Straßenklassen. Eine solche Unterscheidung nehmen beispielsweise die heute bekannten Navigationsgeräte mit integrierter Routenplanung vor. Die Straßenklassen werden dabei einer Straßenkarte entnommen und der momentanen Position des Fahrzeugs zugeordnet. Ebenso können Mauterfassungsgeräte so ausgelegt werden, dass sie die einzelnen Straßenklassen feiner als bisher unterscheiden, d. h. die Mauterfassungsgeräte erkennen nicht mehr nur, ob sich das Fahrzeug auf einer Autobahn befindet oder nicht, sondern unterscheiden verschiedene Straßenklasse, also Autobahn, Schnellstraße, Landstraße, innerstädtische Straße etc.. Je nach Straßenklasse wird dann gestaffelt eine unterschiedliche Gebühr erhoben. Entsprechend dieser Überlegung unterscheidet in einer weiteren Ausgestaltung die Informationseinrichtung zwischen mautpflichtigen Straßen unterschiedlicher Mautgebührenhöhe. Eine Kopplung zwischen einem die aktuelle Straßenklasse erkennenden Navigations- oder Mauterfassungsgerät und einer Begrenzungseinrichtung ermöglicht demnach die Anpassung der erreichbaren Fahrgeschwindigkeit an die jeweils gesetzliche Höchstgeschwindigkeit. Dies ist insbesondere für Fahrer von Nutzfahrzeugen von Vorteil, da sie auf den unterschiedlichen Straßen weder langsamer als erlaubt fahren müssen und damit auch nicht unnötig als Verkehrshindernis auftreten, noch zu schnell fahren können, wodurch Strafgebühren vermieden werden.

Eine weitere Ausführung der Erfindung sieht vor, dass die Informationseinrichtung mit einer drahtlosen Empfangseinheit versehen ist, die die von einer externen Sendeeinheit mit jeweils einem Straßentyp übermittelten, zulässigen Höchstgeschwindigkeiten empfängt und in der Speichereinrichtung ablegt. Die Informationseinrichtung empfängt also von der externen Sendeeinheit ein stets aktuell gültiges zweidimensionales Parameterfeld. Ändern sich beispielsweise die zulässigen Höchstgeschwindigkeiten durch eine neue Gesetzgebung, so kann auf diese Weise eine einfache Aktualisierung der Daten in der Informationseinrichtung stattfinden, ohne dass ein Werkstattbesuch erforderlich wird. Die Übermittlung eines neuen Parameterfeldes kann entweder einmalig erfolgen, beispielsweise nach dem Start des Fahrzeugs, oder auch wiederholt, insbesondere in Abhängigkeit vom aktuell befahrenen Gebiet. Letzteres verringert den Speicherbedarf in der Informationseinrichtung. Beispielsweise kann ein externer Mobilfunksender die Position eines mit einer Mobilfunkeinheit ausgerüsteten Mauterfassungsgerätes anhand der aktuell benutzten Mobilfunkzelle erkennen, daraus auf das Befahren eines neuen Gebietes schließen und entsprechend das Versenden eines neuen Parameterfeldes veranlassen. Ebenso kann die Informationseinrichtung die aktuelle Position an den externen Sender übermitteln oder sogar das selbsttätig erkannte, aktuelle Gebiet weitermelden, woraufhin der externe Sender die in dem Gebiet geltenden Höchstgeschwindigkeiten überträgt.

Die Erfindung wird nachfolgend anhand eines Ausführungsbeispiels und der Zeichnung näher erläutert. Es zeigt:

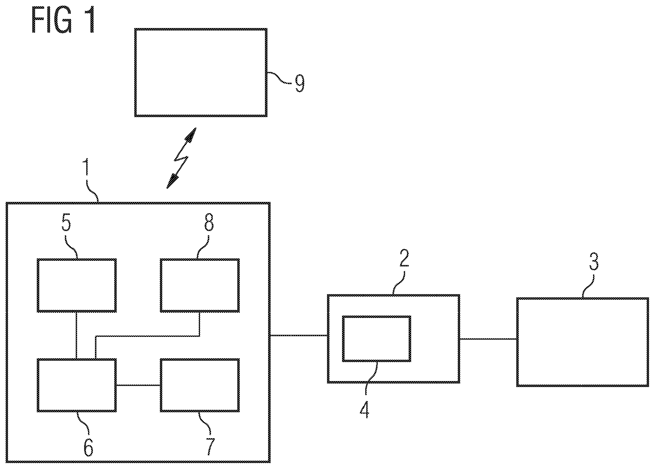

- Figur 1: ein System zur Einstellung der Geschwindigkeit eines Nutzfahrzeugs auf eine zulässige Höchstgeschwindigkeit.

Das in Figur 1 dargestellte System zur Einstellung der Geschwindigkeit eines Nutzfahrzeugs auf eine gesetzlich vorgeschriebene Höchstgeschwindigkeit beinhaltet eine Informationseinrichtung 1 in Gestalt eines Mauterfassungsgerätes und einen mit der Informationseinrichtung 1 verbundenen und als Begrenzungseinrichtung 2 wirkenden Geschwindigkeitsregler. Der Geschwindigkeitsregler greift in die Steuerung eines Motors 3 eines nicht dargestellten Nutzfahrzeugs dahingehend ein, dass er über die Motorsteuergrößen wie Zündverstellwinkel und/oder Drosselklappenwinkel bzw. Kraftstoffeinspritzmenge die vom Fahrzeug erreichbare Geschwindigkeit auf einen Maximalwert begrenzt. Der Maximalwert der Fahrgeschwindigkeit ist in einer Speichereinheit 4 der Begrenzungseinrichtung 2 abgelegt. Die Informationseinrichtung 1 beinhaltet eine Positionserfassungseinheit 5 zur Bestimmung der aktuellen Position des Nutzfahrzeugs und eine mit der Positionserfassungseinheit 5 verbundene Recheneinheit 6 zur Ermittlung des aktuell befahrenen Straßentyps anhand des Vergleiches der aktuellen Position des Fahrzeugs mit den Koordinaten der Straßen einer Straßenkarte. Die Straßenkarte ist in einer mit der Recheneinheit 6 verbundenen Speichereinheit 7 abgelegt.

Nach dem Start des Nutzfahrzeugs ermittelt die Informationseinrichtung 1 fortlaufend den aktuell befahrenen Straßentyp. Je nach aktuellem Straßentyp bestimmt sie anhand eines in der Speichereinheit 7 abgelegten zweidimensionalen Parameterfeldes, das zu den Straßentypen zugeordnete zulässige Höchstgeschwindigkeiten enthält, die aktuell gültige Höchstgeschwindigkeit. Diese gibt sie als aktuell gültigen Maximalwert an die Begrenzungseinrichtung 2 aus, welche den Maximalwert in der Speichereinrichtung 4 ablegt und bei den nächsten Motoreingriffen berücksichtigt, d.h. die Begrenzungseinrichtung 2 passt die Werte für die maximal einzustellenden Motorsteuergrößen entsprechend an.

Die Recheneinheit 6 der Informationseinrichtung 1 ist des weiteren mit einer drahtlosen Empfangseinheit 8 ausgestattet, die in diesem Beispiel eine GSM-Einheit ist. Die Empfangseinheit 8 empfängt während der Fahrt Signale von einer externen Sendeeinheit 9. Entsprechend der aktuellen Position des Fahrzeugs innerhalb der Reichweite einer jeweiligen GSM-Zelle wird von der Sendeeinheit 9 an die Empfangseinheit 8 eine zugehörige Länderkennung übermittelt. Anhand der Länderkennung ermittelt die Informationseinrichtung, welches der in der Speichereinrichtung 7 abgelegten zweidimensionalen Parameterfelder in dem Land gültig ist. Die zwei Dimensionen Straßentyp und Höchstgeschwindigkeit bilden in Verbindung mit der Dimension Land also eine Art dreidimensionales Parameterfeld, aus dem je nach aktueller Länderkennung ein zweidimensionales Parameterfeld aus Straßentypen und zugehörigen Höchstgeschwindigkeiten ausgewählt wird.

## Patentansprüche

1. System zur Einstellung der Geschwindigkeit eines Fahrzeugs auf eine zulässige Höchstgeschwindigkeit mit einer Begrenzungseinrichtung (2), die mittels Motoreingriff die erreichbare Fahrgeschwindigkeit des Fahrzeugs auf einen Maximalwert begrenzt, und einer Informationseinrichtung (1), die bei einer Änderung der zulässigen Höchstgeschwindigkeit während der Fahrt die Begrenzungseinrichtung (2) veranlasst, die Fahrgeschwindigkeit auf einen geänderten Maximalwert zu begrenzen, wobei die Informationseinrichtung (1)
- eine Einrichtung zur Erkennung des aktuell befahrenen Straßentyps ist - aus einer Speichereinrichtung (7) die zu dem aktuell befahrenen Straßentyp gehörende zulässige Höchstgeschwindigkeit ausliest und als geänderten Maximalwert berücksichtigt sowie
- eine zulässige Höchstgeschwindigkeit in Abhängigkeit von sowohl dem aktuell befahrenen Straßentyp als auch einem aktuell befahrenen Gebiet ermittelt und
- mit einer drahtlosen Empfangseinheit (8) versehen ist, welche ein von einer externen Sendeeinheit (9) übermitteltes Gebietssignal zur Identifizierung des aktuell befahrenen Gebietes empfängt,
**dadurch gekennzeichnet, dass** die drahtlose Empfangseinheit (8) eine Mobilfunkeinheit und das Gebietssignal ein Ländercode ist.

2. System nach Anspruch 1, **dadurch gekennzeichnet, dass** die Informationseinrichtung (1) beim aktuell befahrenen Straßentyp unterscheidet zwischen einer mautpflichtigen Straße und einer nicht-mautpflichtigen Straße.

3. System nach einem der Ansprüche 1 oder 2, **dadurch gekennzeichnet, dass** die Informationseinrichtung (1) beim aktuell befahrenen Straßentyp unterscheidet zwischen Straßenklassen.

4. System nach einem der vorhergehenden Ansprüche, **da**- **durch gekennzeichnet,** dass die Informationseinrichtung (1) beim aktuell befahrenen Straßentyp unterscheidet zwischen mautpflichtigen Straßen unterschiedlicher Mautgebührenhöhe.

5. System nach Anspruch 1, **dadurch gekenn - zeichnet**, dass das aktuell befahrene Gebiet durch die Grenzen eines Landes bestimmt ist.

6. System nach Anspruch 1, **dadurch gekennzeichnet, dass** die Informationseinrichtung (1) das aktuell befahrene Gebiet anhand der aktuellen Position des Fahrzeugs und einer Straßenkarte selbst ermittelt.

7. System nach einem der vorhergehenden Ansprüche 1 bis 5, **dadurch gekennzeichnet, dass** die Informationseinrichtung (1) mit einer drahtlosen Empfangseinheit (8) versehen ist, die die von einer externen Sendeeinheit (9) mit jeweils einem Straßentyp übermittelten, zulässigen Höchstgeschwindigkeiten empfängt und in der Speichereinrichtung (7) ablegt.

8. System nach den Ansprüchen 1 und 6, dadurch ge - **kennzeichnet,** dass die externe Sendeeinheit (9) die Übermittlung durchführt, wenn das Fahrzeug eine Gebietsgrenze überfährt oder gerade überfahren hat.

9. Verfahren zur Einstellung der Geschwindigkeit eines Fahrzeugs auf eine zulässige Höchstgeschwindigkeit, bei dem mittels Motoreingriff die erreichbare Fahrgeschwindigkeit des Fahrzeugs auf einen Maximalwert begrenzt wird und bei einer Änderung der zulässigen Höchstgeschwindigkeit während der Fahrt die Fahrgeschwindigkeit auf einen geänderten Maximalwert begrenzt wird, wobei der aktuell befahrene Straßentyp erkannt wird und dass aus einer Speichereinrichtung (7) die zu dem aktuell befahrenen Straßentyp gehörende, zulässige Höchstgeschwindigkeit ausgelesen und als geänderter Maximalwert berücksichtigt wird und dass die zulässige Höchstgeschwindigkeit in Abhängigkeit von sowohl dem aktuell befahrenen Straßentyp als auch einem aktuell befahrenen Gebiet ermittelt wird und ein von einer externen Sendeeinheit (9) übermitteltes Gebietssignal zur Identifizierung des aktuell befahrenen Gebietes mittels einer drahtlosen Empfangseinheit (8) empfangen wird, **dadurch gekennzeichnet, dass** die drahtlose Empfangseinheit eine Mobilfunkeinheit und das Gebietssignal ein Ländercode ist.

## Claims

1. A system for setting the speed of a vehicle to a maximum permissible speed, comprising a limiting device (2) that, by means of engine intervention, limits the attainable speed of the vehicle to a maximum value, and comprising an information device (1) that, when the maximum permissible speed is modified during driving, induces the limiting device (2) to limit the vehicle speed to a modified maximum value, wherein the information device (1)
- is a device for identifying the type of road currently being driven upon,
- reads the maximum permissible speed associated with the type of road currently being driven upon out of a memory device (7) and considers this maximum permissible speed as a modified maximum value, and
- establishes a maximum permissible speed as a function of both the type of road currently being driven upon and an area currently being driven in, and
- is provided with a wireless receiving unit (8) which receives an area signal transmitted by an external transmitting unit (9) in order to identify the area currently being driven in,
**characterized in that** the wireless receiving unit (8) is a mobile radio unit and the area signal is a country code.

2. The system according to Claim 1, **characterized in that**, in the case of the type of road currently being driven upon, the information device (1) distinguishes between a toll road and a non-toll road.

3. The system according to any one of Claims 1 or 2, **characterized in that**, in the case of the type of road currently being driven upon, the information device (1) distinguishes between classes of roads.

4. The system according to any one of the preceding claims, **characterized in that** the information device (1), in the case of the type of road currently being driven upon, distinguishes between toll roads of differing toll amounts.

5. The system according to Claim 1, **characterized in that** the area currently being driven in is determined by the borders of a country.

6. The system according to Claim 1, **characterized in that** the information device (1) itself establishes the area currently being driven in based on the current position of the vehicle and a road map.

7. The system according to any one of the preceding Claims 1 to 5, **characterized in that** the information device (1) is provided with a wireless receiving unit (8) which receives the maximum permissible speeds transmitted with one type of road each by an external transmitting unit (9), and stores these in the memory device (7).

8. The system according to Claims 1 and 6, **characterized in that** the external transmitting unit (9) carries out the transmission if the vehicle is crossing or has just crossed an area border.

9. A method for setting the speed of a vehicle to a maximum permissible speed, in which, by means of engine intervention, the attainable speed of the vehicle is limited to a maximum value, and when the maximum permissible speed is modified during driving, the vehicle speed is limited to a modified maximum value, wherein the road currently being driven upon is identified and the maximum permissible speed associated with the type of road currently being driven upon is read out of a memory device (7) and is considered as a modified maximum value, and the maximum permissible speed is established as a function of both the type of road currently being driven upon and an area currently being driven in, and an area signal transmitted by an external transmitting unit (9) in order to identify the area currently being driven in is received by means of a wireless receiving unit (8), **characterized in that** the wireless receiving unit is a mobile radio unit and the area signal is a national code.

## Revendications

1. Système destiné au réglage de la vitesse d'un véhicule à une vitesse maximale admissible avec un dispositif de limitation (2) qui, au moyen d'une intervention sur le moteur, limite à une valeur maximale la vitesse de déplacement du véhicule pouvant être atteinte, et avec un dispositif d'information (1) qui, lors d'une variation de la vitesse maximale admissible pendant le déplacement, amène le dispositif de limitation (2) à limiter la vitesse de déplacement à une valeur maximale modifiée, le dispositif d'information (1)
- étant un dispositif destiné à l'identification du type de route actuellement emprunté - lisant à partir d'un dispositif de mémoire (7) la vitesse maximale admissible correspondant au type de route emprunté actuellement et la prenant en considération en tant que valeur maximale modifiée, et
- déterminant une vitesse maximale admissible en fonction non seulement du type de route emprunté actuellement mais aussi d'un territoire actuellement parcouru et
- étant munie d'une unité de réception (8) sans fil qui reçoit un signal territorial transmis par une unité d'émission (9) externe en vue de l'identification du territoire actuellement parcouru,
**caractérisé en ce que** l'unité de réception (8) sans fil est une unité radio mobile, et le signal territorial est un code de pays.

2. Système selon la revendication 1, **caractérisé en ce que**, en présence du type de route emprunté actuellement, le dispositif d'information (1) fait la distinction entre une route à péage et une route sans péage.

3. Système selon l'une des revendications 1 ou 2, **caractérisé en ce que**, en présence du type de route emprunté actuellement, le dispositif d'information (1) fait la distinction entre les catégories de routes.

4. Système selon l'une des revendications précédentes, **caractérisé en ce que**, en présence du type de route emprunté actuellement, le dispositif d'information (1) fait la distinction entre des routes à péage ayant différents niveaux de montant de péage.

5. Système selon la revendication 1, **caractérisé en ce que** le territoire actuellement parcouru est défini par les frontières d'un pays.

6. Système selon la revendication 1, **caractérisé en ce que** le dispositif d'information (1) détermine lui-même le territoire actuellement parcouru à l'aide de la position actuelle du véhicule et d'une carte routière.

7. Système selon l'une des revendications 1 à 5, **caractérisé en ce que** le dispositif d'information (1) est muni d'une unité de réception (8) sans fil qui reçoit les vitesses maximales admissibles transmises par une unité d'émission (9) externe avec respectivement un type de route et les enregistre dans le dispositif de mémoire (7).

8. Système selon l'une des revendications 1 et 6, **caractérisé en ce que** l'unité d'émission (9) externe effectue la transmission quand le véhicule franchit une frontière territoriale ou vient de la franchir.

9. Procédé de réglage de la vitesse d'un véhicule à une vitesse maximale admissible dans lequel, au moyen d'une intervention sur le moteur, la vitesse de déplacement du véhicule pouvant être atteinte est limitée à une valeur maximale et, lors d'une variation de la vitesse maximale admissible pendant le déplacement, est limitée à une valeur maximale modifiée, le type de route actuellement emprunté étant détecté, et en ce que, à partir d'un dispositif de mémoire (7),la vitesse maximale admissible correspondant au type de route actuellement emprunté est lue et est prise en considération en tant que valeur maximale modifiée, et en ce que la vitesse maximale admissible est déterminée non seulement à partir du type de route actuellement emprunté mais également en fonction d'un territoire actuellement parcouru, et un signal territorial, transmis par une unité d'émission (9) externe, est reçu au moyen d'une unité de réception (8) sans fil en vue de l'identification du territoire actuellement parcouru, **caractérisé en ce que** l'unité de réception (8) sans fil est une unité radio mobile, et le signal territorial est un code de pays.
